# FASCICULE DE BREVET EUROPEEN

(11) **EP 2 009 238 B1**
(45) Date de publication et mention de la délivrance du brevet: **31.10.2012**
(21) Numéro de dépôt: 08159044.0
(22) Date de dépôt: 25.06.2008
(51) Int. Cl.: F01D 5/10, F01D 5/26, F01D 25/06, F16F 15/12

(54) **Roue mobile pour un turboréacteur et turboréacteur la comportant**
Laufrad für Turbostrahltriebwerk und damit ausgestattetes Turbostrahltriebwerk
Rotor wheel for a jet engine, and jet engine comprising same

(30) Priorité: 26.06.2007 FR 0704581
(43) Date de publication de la demande: 31.12.2008
(73) Titulaire: SNECMA, 75015 Paris (FR)
(72) Inventeur: Baumhauer, Stéphane, Jean, Joseph, 91300, Massy (FR); Dupeux, Jérôme, Alain, 77000, Vaux le Penil (FR); Garcin, François, Maurice, 75019, Paris (FR); Lombard, Jean-Pierre, François, 77830, Pamfou (FR); Seinturier, Eric, 64800, Bruges (FR); Balmes, Etienne, 75013, Paris (FR)
(74) Mandataire: David, Daniel

(56) Documents cités:
- EP-A- 1 074 762
- EP-A- 1 180 579
- WO-A-99/43955
- FR-A- 2 888 876
- US-A- 4 784 012
- US-A- 4 817 455
- US-A- 6 102 664

## Description

La présente invention se rapporte au domaine de l'amortissement de pièces, plus particulièrement de l'amortissement de roues mobiles dans un turboréacteur.

Elle vise une roue mobile et un turboréacteur comportant une telle roue mobile.

Dans tout ce qui suit, les termes « axial » et « radial » correspondent respectivement à une direction axiale et à une direction radiale du turboréacteur.

Un turboréacteur comporte des ensembles de roues mobiles et des ensembles de roues fixes. Les roues mobiles sont constituées classiquement de disques et d'aubes rapportées sur ces disques, ou bien sont constituées de disques aubagés monoblocs (DAM), ou encore sont constituées d'anneaux aubagés monoblocs (ANAM).

Lors du fonctionnement d'un turboréacteur, les pièces le constituant peuvent être soumises à des sollicitations dynamiques dont les répercussions sont dommageables. Les pièces doivent être dimensionnées de manière à répondre à des impératifs de performances aérodynamiques, aéro-acoustiques, ainsi que de tenue mécanique à la température et au chargement aérodynamique, et éventuellement à la rotation. Le couplage aéro-élastique, c'est-à-dire le couplage entre la dynamique des roues et l'écoulement fluide, conditionne également la stabilité vibratoire des pièces. Il est donc nécessaire que les pièces soient soumises à des amplitudes de sollicitations vibratoires qui restent faibles.

Un but recherché par les fabricants et utilisateurs de turboréacteurs est de limiter les vibrations au niveau des aubes des roues mobiles.

Lorsque les roues mobiles comportent des aubes rapportées sur les disques, il existe une possibilité de dissipation d'énergie par frottement au niveau des liaisons entre ces disques et ces aubes. En revanche, pour des roues mobiles de type disque aubagé monobloc (DAM) ou les anneaux aubagés monoblocs (ANAM), sur lesquels les aubes sont réalisées monoblocs avec les disques, cette dissipation d'énergie par frottement ne peut pas avoir lieu. Les niveaux vibratoires des aubes restent donc plus élevés.

Pour surmonter cet inconvénient, il a été proposé d'équiper les aubes de moyens d'amortissement, afin de réduire les effets des vibrations auxquelles elles sont soumises. Le document EP 1 253 290 propose d'équiper le profil des aubes d'un moyen amortisseur comportant une couche de matériau viscoélastique et une couche de contrainte. Le profil des aubes se trouvant dans la veine d'écoulement des gaz, la solution proposée dans ce document prévoit de creuser une encoche dans le profil des aubes, afin d'y loger les moyens amortisseurs. La surface des profils d'aubes en contact avec l'écoulement ne présente ainsi pas d'irrégularité et l'écoulement de gaz n'est pas perturbé. Un tel agencement présente cependant d'autres inconvénients. En effet, il est nécessaire d'usiner chaque profil d'aube pour réaliser l'encoche de réception du moyen d'amortissement. Cette opération d'usinage est délicate car l'aube est de faible épaisseur. D'autre part, dans le cas d'une roue mobile, si l'opération d'usinage et/ou les dimensions du moyen d'amortissement ne sont pas identiques d'une aube à l'autre, il existe un risque de déséquilibre global de la roue, qui peut se traduire par un balourd lors du fonctionnement du turboréacteur. Toutes ces contraintes liées à l'opération d'usinage augmentent les durées et les coûts de fabrication de pièces.

L'invention a pour but de résoudre le problème général lié aux vibrations des aubes des roues mobiles d'un turboréacteur. L'invention propose une solution différente de celle présentée dans le document EP 1 253 290, en évitant les inconvénients liés à cette solution de la technique antérieure.

L'art antérieur est également constitué des documents FR 2888876 qui porte sur moyen d'amortissement formé d'un jonc métallique d'amortissement monté dans une gorge du rotor ouverte vers l'axe du rotor ; EP 1074762 qui décrit un moyen pour amortir un rotor comprenant, selon un mode de réalisation, une couche viscoélastique contre le rotor et deux anneaux métalliques fendus libres de vibrer l'un par rapport à l'autre ; EP 1180579 qui décrit un amortisseur de rotor de type DAM avec un élément fixé sur le voile du rotor et des doigts qui le prolongent prennent appui sur la jante et US 4817455 qui décrit un élément d'équilibrage d'un rotor formé d'un jonc métallique fixé sous la jante et qui est usiné à l'endroit en rapport avec le balourd.

Selon un premier aspect, l'invention se rapporte à une roue mobile, telle que dans un turboréacteur, comportant notamment une pluralité d'aubes et leur support, qui s'étendent sensiblement radialement. Selon l'invention, ladite roue comporte au moins une pièce intermédiaire s'étendant, suivant une direction sensiblement axiale, depuis le support d'aubes, et au moins un moye amortisseur disposé sur au moins une face de ladite pièce intermédiaire.

Le moyen amortisseur est segmenté suivant une direction axiale en au moins deux moyens amortisseurs élémentaires et/ou est segmenté suivant une direction circonférentielle en au moins deux moyens amortisseurs élémentaires.

Selon une forme de réalisation, le moyen amortisseur recouvre totalement ladite face de la pièce intermédiaire. Selon une autre forme de réalisation, le moyen amortisseur la recouvre partiellement.

Le moyen amortisseur comporte au moins une couche de matériau viscoélastique et au moins une contre-couche de matériau rigide. La couche de matériau viscoélastique et la contre-couche de matériau rigide sont fixées l'une à l'autre, par exemple au moyen d'un matériau adhésif. Particulièrement, le moyen amortisseur comporte plusieurs couches de matériau viscoélastique et plusieurs contre-couches de matériau rigide qui sont disposées de façon alternée.

Les couches de matériau viscoélastique présentent soit toutes les mêmes caractéristiques mécaniques soit des caractéristiques mécaniques différentes.

Par ailleurs les contre-couches de matériau rigide présentent soit toutes les mêmes caractéristiques mécaniques soit des caractéristiques mécaniques différentes.

La pièce intermédiaire sur laquelle est disposé un moyen amortisseur présente une épaisseur soit constante soit une zone d'épaisseur non constante. Selon cette dernière forme de réalisation, la zone d'épaisseur non constante présente une épaisseur qui augmente suivant une direction axiale, de son bord le plus proche du support vers son bord le plus éloigné du support d'aubes. Selon une variante de cette forme de réalisation, la zone d'épaisseur non constante présente une épaisseur qui augmente suivant une direction axiale, de son bord le plus éloigné du support d'aubes vers son bord le plus proche de celui-ci. Selon une variante de cette forme de réalisation, la zone d'épaisseur non constante présente une épaisseur qui augmente suivant une direction axiale, de son centre vers son bord le plus éloigné du support d'aubes et vers son bord le plus éloigné de celui-ci. Selon une autre variante de cette forme de réalisation, la zone d'épaisseur non constante présente une épaisseur qui augmente suivant une direction axiale et suivant une direction circonférentielle.

Selon une autre forme de réalisation, la pièce intermédiaire comporte une extrémité reliée audit support et le moyen amortisseur comporte une partie principale qui est disposée sur ladite pièce intermédiaire et une partie latérale qui est disposée sur une face sensiblement radiale dudit support. Selon une autre forme de réalisation, ladite pièce intermédiaire comporte une extrémité reliée à une bride d'extrémité, et le moyen amortisseur comporte une partie principale qui est disposée sur ladite pièce intermédiaire et une partie latérale qui est disposée sur une face sensiblement radiale de ladite bride d'extrémité. Selon l'une ou l'autre de ces deux formes de réalisation, ladite partie principale et ladite partie latérale sont reliées par une partie de liaison formant potence.

Selon une variante de ces deux formes de réalisation, ladite pièce intermédiaire comporte une extrémité reliée audit support et une autre extrémité reliée à une bride d'extrémité, et la roue comporte un premier moyen amortisseur comportant une première partie principale qui est disposée sur ladite pièce intermédiaire et une première partie latérale qui est disposée sur une face sensiblement radiale dudit support, lesdites première partie principale et première partie latérale étant reliées par une première partie de liaison formant potence, et la roue comporte un deuxième moyen amortisseur comportant une deuxième partie principale qui est disposée sur la première partie principale et une deuxième partie latérale qui est disposée sur une face sensiblement radiale de ladite bride d'extrémité, lesdites deuxième partie principale et deuxième partie latérale étant reliées par une deuxième partie de liaison formant potence.

Selon une variante différente de la précédente, ladite pièce intermédiaire comporte une extrémité reliée audit support et une autre extrémité reliée à une bride d'extrémité, et la roue comporte un premier moyen amortisseur comportant une première partie principale qui est disposée sur ladite pièce intermédiaire et une première partie latérale qui est disposée sur une face sensiblement radiale de ladite bride d'extrémité, lesdites première partie principale et première partie latérale étant reliées par une première partie de liaison formant potence, et la roue comporte un deuxième moyen amortisseur comportant une deuxième partie principale qui est disposée sur la première partie principale et une deuxième partie latérale qui est disposée sur une face sensiblement radiale dudit support, lesdites deuxième partie principale et deuxième partie latérale étant reliées par une deuxième partie de liaison formant potence.

Selon une forme de réalisation, la roue comporte un moyen amortisseur disposé sur une face interne de ladite pièce intermédiaire. Selon une autre forme de réalisation, la roue comporte un moyen amortisseur disposé sur une face externe de ladite pièce intermédiaire.

Selon un deuxième aspect, l'invention se rapporte à une roue mobile, du type comportant un disque ou un anneau portant des aubes, notamment pour un turboréacteur, dans lequel ladite pièce intermédiaire est une virole du disque ou de l'anneau et dans lequel au moins un moyen amortisseur est disposé sur une face interne de ladite virole.

Selon un autre aspect, l'invention se rapporte à un turboréacteur, qui comporte au moins une roue mobile.

L'invention sera mieux comprise à la lecture de la description détaillée qui va suivre, de modes de réalisation particuliers de l'invention, fournis à titre indicatif et nullement limitatif, et illustrés au moyen des dessins annexés, dans lesquels :
- la figure 1 représente de façon schématique et en coupe axiale un turboréacteur comportant des roues conformes à l'invention ;
- la figure 2 représente, en coupe, un moyen amortisseur ;
- la figure 3 représente de façon schématique et en coupe axiale une roue mobile, de type disque aubagé monobloc, équipée d'un moyen amortisseur ;
- la figure 4 est une vue partielle, en perspective, d'une roue mobile, de type disque aubagé monobloc, équipée d'un moyen amortisseur selon une forme de réalisation de l'invention ;
- la figure 5 est une vue en perspective d'une roue mobile, de type disque aubagé monobloc, équipée d'un moyen amortisseur ;
- les figures 6 à 8 sont des vues en perspective d'une roue mobile, de type disque aubagé monobloc, équipée d'un moyen amortisseur selon des formes de l'invention ;
- la figure 9 est une vue partielle, en perspective, d'une roue mobile, de type disque aubagé monobloc, ayant une virole selon une forme de l'invention ;
- les figures 10 à 12 sont des vues partielles, en perspective, d'une roue mobile, de type disque aubagé monobloc, ayant une virole selon d'autres formes de l'invention ;
- la figure 13 est une vue en perspective d'une roue mobile, de type disque aubagé monobloc, équipée d'un moyen amortisseur ;
- la figure 14 est une vue partielle, en perspective, d'une roue mobile, de type disque aubagé monobloc, équipé d'un moyen amortisseur selon une autre forme de réalisation.

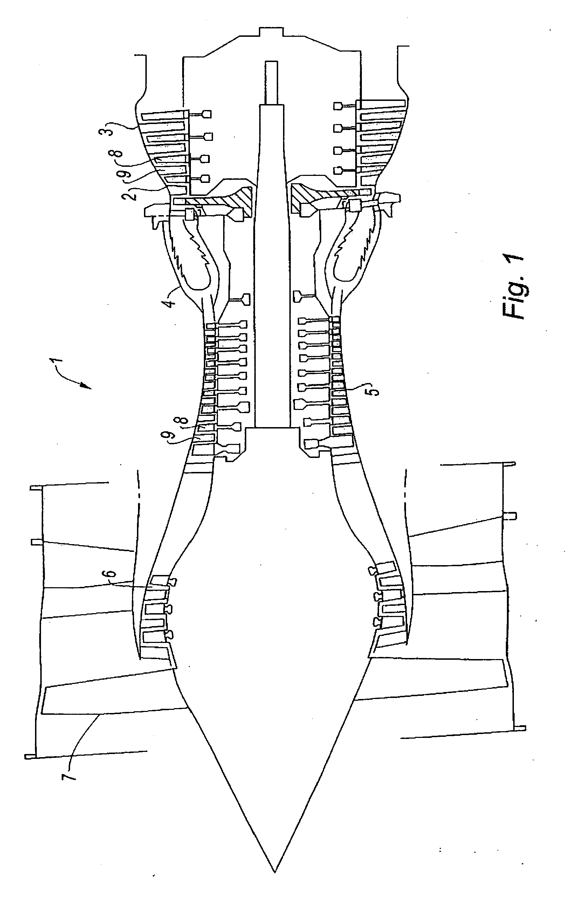

En se référant tout d'abord à la figure 1, on a représenté de manière schématique un turboréacteur 1, comportant une turbine à haute pression 2, une turbine à basse pression 3, une chambre de combustion 4, un compresseur à haute pression 5, un compresseur à basse pression 6 et une soufflante 7. Le turboréacteur 1 comporte des roues mobiles 8 et des roues fixes 9, faisant partie par exemple, de la turbine à haute pression 2 ou de la turbine à basse pression 3 ou du compresseur à haute pression 5

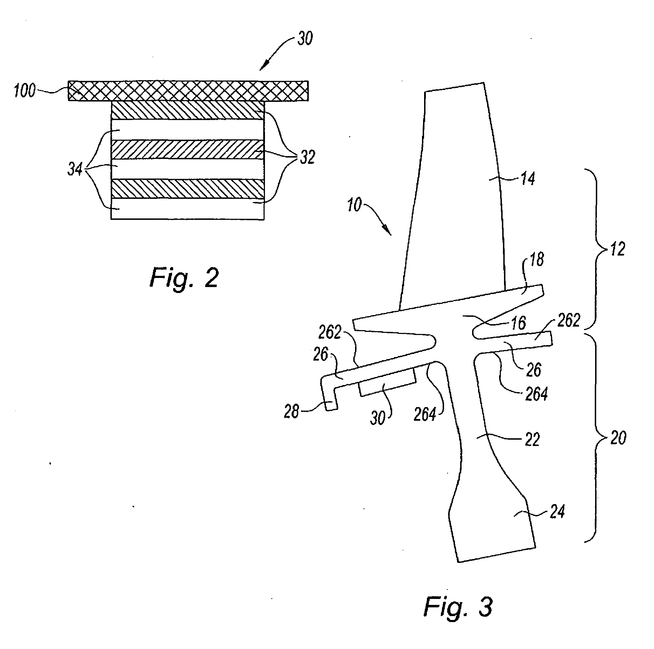

La figure 2 représente un moyen amortisseur 30 disposé sur une pièce 100. Le moyen amortisseur 30 se présente sensiblement sous la forme d'une pile multicouche. Il comporte une couche 32 d'un matériau viscoélastique et une contre-couche 34 d'un matériau rigide. On entend par « matériau rigide » un matériau plus rigide que le matériau viscoélastique de la couche 32. Selon d'autres formes de réalisation, le moyen amortisseur 30 comporte plusieurs couches 32 de matériau viscoélastique et plusieurs contre-couches 34 de matériau rigide, qui sont disposées de façon alternées. L'exemple illustré à la figure 2 montre, de façon non limitative, un moyen amortisseur 30 ayant trois couches 32 de matériau viscoélastique et trois contre-couches 34 de matériau rigide. De préférence, la(les) couche(s) 32 de matériau viscoélastique et la(les) contre-couche(s) 34 de matériau rigide sont d'égales dimensions. Lorsque le moyen amortisseur 30 comporte plusieurs couches 32 de matériau viscoélastique, celles-ci peuvent présenter toutes les mêmes caractéristiques mécaniques, ou bien présenter des caractéristiques mécaniques différentes. Lorsque le moyen amortisseur 30 comporte plusieurs contre-couches 34 de matériau rigide, celles-ci peuvent présenter toutes les mêmes caractéristiques mécaniques, ou bien présenter des caractéristiques mécaniques différentes. Le moyen amortisseur 30 est fixé sur la pièce 100 par adhésion au moyen d'un film de colle ou par polymérisation. Les couches 32 de matériau viscoélastique et les couches 34 de matériau rigide sont fixées les une aux autres également par adhésion, au moyen d'un film de colle ou par polymérisation.

La figure 3 montre en demi coupe axiale une roue mobile 8 de type disque aubagé monobloc équipé d'un moyen amortisseur 30. De manière classique, la roue 10 comporte une aube 12 formée elle-même d'une pale 14 et d'une base d'aube 16 qui s'étendent respectivement de part et d'autre d'une plateforme 18 suivant une direction radiale. La roue comporte également un disque 20, formé d'un support d'aube 22, qui est ici un voile de disque, ledit support 22 se terminant radialement vers l'intérieur par un moyeu 24. Entre le support d'aube 22 et la base d'aube 16, le disque 20 comporte deux viroles 26, s'étendant de part et d'autre dudit support 22 suivant une direction sensiblement axiale. L'une au moins de ces viroles 26 comporte, sur une extrémité opposée au support 22, une bride d'extrémité 28 pour une fixation de ladite virole 26 à une pièce adjacente (non représentée). Chaque virole 26 présente une face externe 262 et une face interne 264. Un moyen amortisseur 30 est fixé sur la face interne 264 d'au moins l'une des viroles 26. Lors du fonctionnement du turboréacteur 1, la force centrifuge résultant de rotation de la roue mobile 8 a pour effet de plaquer le moyen amortisseur 30 contre la face interne 264 de la virole 26, ce qui renforce l'adhérence du moyen amortisseur 30 sur la virole 26. C'est pourquoi il est préféré que le(s) moyen(s) amortisseurs 30 soi(en)t disposé(s) sur la face interne 264 de ladite virole 26, pour une roue mobile 8.

L'effet d'amortissement procuré par un moyen amortisseur tel que celui représenté sur la figure 2 résulte de contraintes de cisaillement à l'intérieur de chaque couche 32 de matériau viscoélastique. Ce cisaillement provoque une dissipation d'énergie au niveau de chaque couche 32 de matériau viscoélastique. Ainsi, les effets des sollicitations vibratoires qui s'appliquent sur les disques et/ou les anneaux 20 sont amortis. Les effets des sollicitations vibratoires qui s'appliquent aux aubes 12 sont amortis également, de manière indirecte. Du fait que l'amortissement des modes vibratoires des aubes 12 découle de l'amortissement des modes vibratoires du disque, il est possible d'éviter une transmission d'énergie vibratoire d'une aube à l'autre, ce qui est un avantage supplémentaire de l'invention.

La description détaillée qui va suivre se rapporte à une application de l'invention sur une roue mobile 8, constituée d'un disque aubagé monobloc, pour lequel la pièce intermédiaire 26 est une virole du disque 20 et pour lequel le support d'aubes 22 est un voile du disque 20.

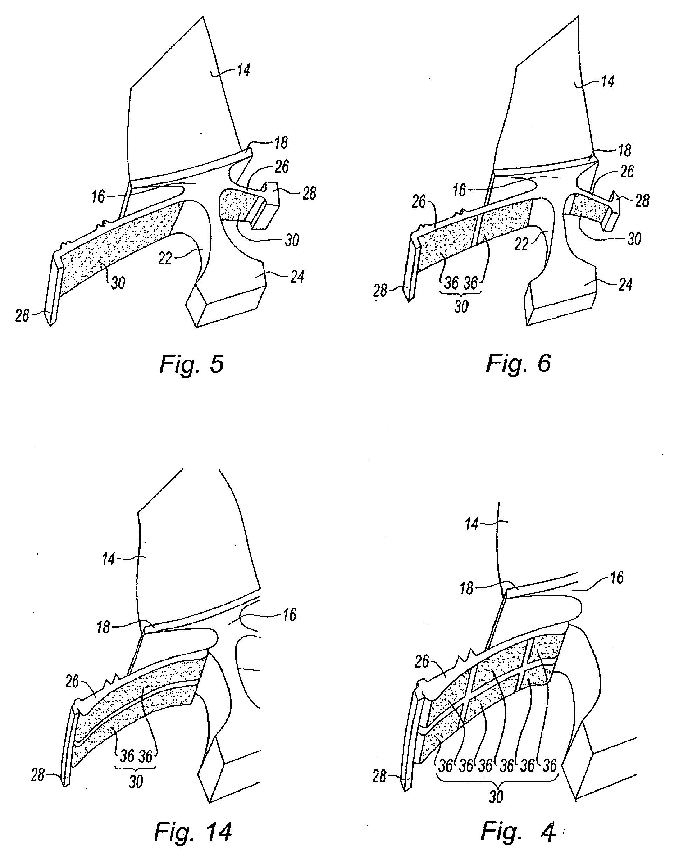

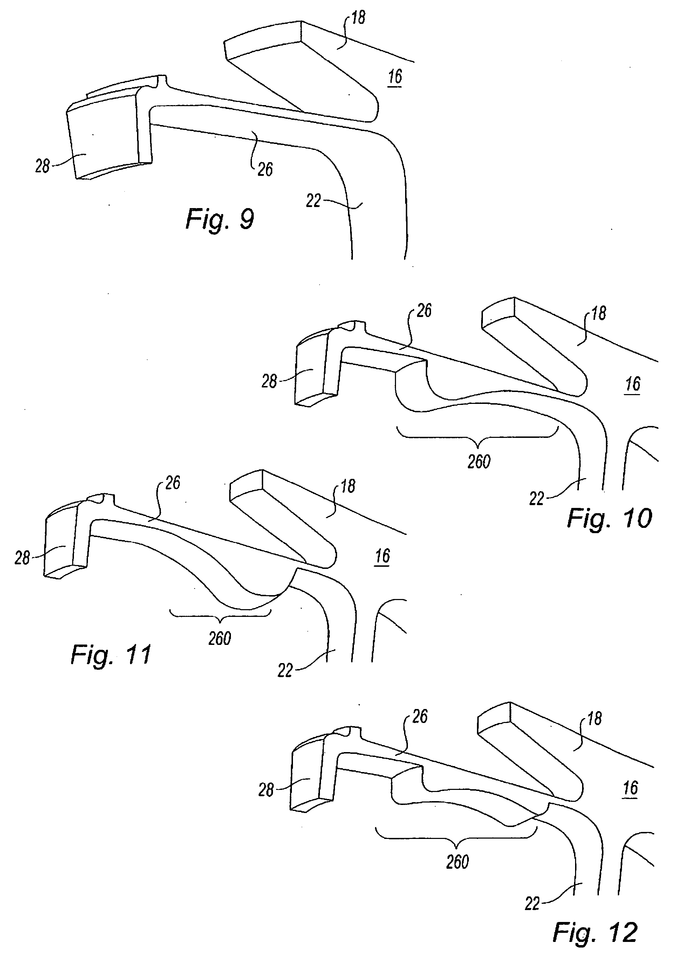

La figure 9 représente, en perspective et à échelle agrandie, une portion de roue en forme de secteur montrant une virole 26 qui présente une épaisseur sensiblement constante. Les figures 5 à 8 représentent plusieurs formes de réalisation de la roue mobile 8, pour lesquelles les viroles 26 présentent une épaisseur sensiblement constante et sont équipée de moyens amortisseurs 30.

La figure 5 illustre une forme de réalisation, dans laquelle la face interne 264 de chacune des deux viroles 26 est totalement recouverte d'un moyen amortisseur 30. Plus particulièrement la partie travaillante de ce moyen amortisseur est définie par rapport au mode de vibration, c'est-à-dire celle qui se déforme le plus selon ce mode de vibration.

La figure 6 illustre une forme de réalisation de l'invention, dans laquelle la face interne 264 de l'une des viroles 26 reçoit un moyen amortisseur 30 qui est segmenté suivant la direction axiale en deux moyens amortisseurs élémentaires 36. Un tel agencement présente l'avantage d'un montage plus aisé que le précédent.

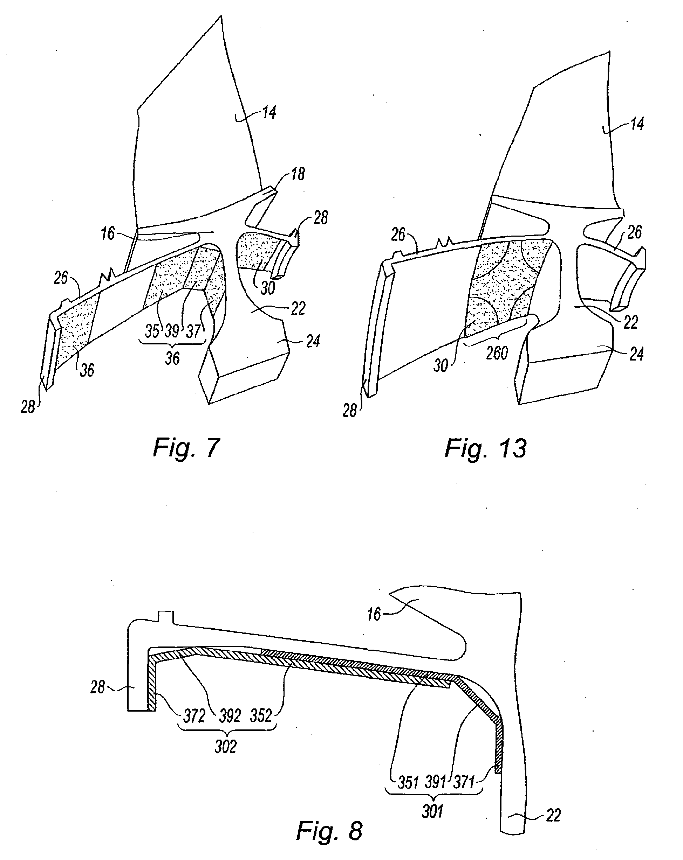

La figure 7 illustre encore une autre forme de réalisation de l'invention, dans laquelle la face interne 264 de l'une des viroles 26 (à droite sur la figure 7) est totalement recouverte d'un moyen amortisseur 30, tandis que la face interne 264 de l'autre virole 26 (à gauche sur la figure 7) est équipée d'un moyen amortisseur 30 qui est segmenté suivant la direction axiale en deux moyens amortisseurs élémentaires 36.

L'un de ces moyens élémentaires 36 comporte une partie principale 35, une partie latérale 37 et une partie de liaison 39. La partie principale 35 recouvre partiellement ladite face interne 264, à proximité du voile 22. La partie latérale 37 recouvre partiellement une face sensiblement radiale du voile 22, à proximité de ladite face interne 264. La partie de liaison 39 relie ladite partie principale 35 et ladite partie latérale 37. Du fait que la présence d'une ou plusieurs contre-couche(s) rigide(s) 34, la partie de liaison 39 n'est pas plaquée sur la zone de la roue 10 se trouvant à la jonction entre la virole 26 et le voile 22. Cette partie de liaison 39 s'étend entre la partie principale 35 et la partie latérale 37 en présentant sensiblement une forme de potence ou de pont._

L'autre moyen amortisseur élémentaire 36 de cette virole 26 (à gauche sur la figure 7) comporte une partie principale 35, une partie latérale 37 et une partie de liaison 39. La partie principale 35 recouvre partiellement ladite face interne 264, à proximité d'une bride d'extrémité 28 de la virole 26. La partie latérale 37 recouvre partiellement une face sensiblement radiale de ladite bride d'extrémité 28, à proximité de ladite face interne 264. La partie de liaison 39 relie ladite partie principale 35 et ladite partie latérale 37 et présente sensiblement une forme de potence ou de pont.

La figure 8 illustre, en coupe axiale, encore une autre forme de réalisation de l'invention, qui est une variante de la forme de réalisation représentée à la figure 7. La face interne 264 de la virole 26 est recouverte d'un premier moyen amortisseur 301 et d'un deuxième moyen amortisseur 302 qui sont tous les deux du type ayant une partie principale 351, 352, une partie latérale 371, 372 et une partie de liaison 391, 392. Ces deux moyens amortisseurs 301, 302 sont superposés et opposés. En d'autres termes, la partie principale 351 du premier moyen amortisseur 301 est fixée sur la face interne 264 de la virole 26 et la partie principale 352 du deuxième moyen amortisseur 302 est fixée sur la partie principale 351 du premier moyen amortisseur 301. L'un d'eux a sa partie latérale 371 disposée sur une face sensiblement radiale du voile 22 avoisinant ladite face interne 264, tandis que l'autre a sa partie latérale 372 disposée sur une face sensiblement radiale de la bride d'extrémité 28 avoisinant ladite face interne 264. Sur l'exemple illustré à la figure 8, le moyen amortisseur 301 qui est directement fixé sur la face interne 264 de la virole 26 est celui dont la partie latérale 371 est disposé sur la face radiale du voile 22. Dans une autre variante (non représentée) le moyen amortisseur qui est directement fixé sur la face interne de la virole est celui dont la partie latérale est disposé sur la face radiale de la bride d'extrémité.

Les figures 4 et 10 à 14 représentent plusieurs formes de réalisation de roue mobile 8, pour lequel au moins l'une des viroles 26 présente une zone d'épaisseur non constante 260, destinée à recevoir un moyen amortisseur 30.

Sur la figure 10, l'épaisseur de la virole 26 augmente sur sa face interne 264, suivant une direction axiale, de son bord le plus proche du voile 22 vers son bord le plus éloigné du voile 22.

Sur la figure 11, l'épaisseur de la virole 26 augmente sur sa face interne 264, suivant une direction axiale, de son bord le plus éloigné du voile 22 vers son bord le plus proche du voile 22.

Sur la figure 12, l'épaisseur de la virole 26 augmente sur sa face interne 264, suivant une direction axiale, de son centre vers son bord le plus éloigné du voile 22 et vers son bord le plus éloigné du voile 22.

Sur la figure 13, l'épaisseur de la virole 26 augmente sur sa face interne 264, suivant une direction axiale et suivant une direction circonférentielle. La zone d'épaisseur non constante 260 se présente comme une zone sensiblement rectangulaire dont les angles ont une épaisseur accrue par rapport au reste de la surface de ladite zone.

Sur les figures 10 à 12, la zone d'épaisseur non constante 260 correspond à une portion de la virole 26. Mais cette zone d'épaisseur non constante 260 peut aussi correspondre à la totalité de la virole 26, comme c'est le cas pour les formes de réalisation illustrées aux figures 4 et 14. Sur ces deux figures, la zone d'épaisseur non constante 260 de la virole 26 augmente sur sa face interne 264, suivant une direction axiale, de son centre vers son bord le plus éloigné du voile 22 et vers son bord le plus éloigné du voile 22. La figure 14 montre un moyen amortisseur 30 qui est segmenté suivant la direction circonférentielle en deux moyens amortisseurs élémentaires 36. La figure 4 montre un moyen amortisseur 30 qui est segmenté deux fois suivant la direction axiale et une fois suivant la direction circonférentielle en six moyens amortisseurs élémentaires 36.

L'invention n'est pas limitée aux formes de réalisation qui viennent d'être décrites, mais englobe également leurs combinaisons. Par exemple, on peut envisager une virole d'épaisseur constante ayant un moyen amortisseur recouvrant totalement sa face interne, ou bien recouvrant partiellement ladite face interne. Dans l'un ou l'autre cas, le moyen amortisseur peut être segmenté une ou plusieurs fois suivant la direction axiale, ou bien il peut être segmenté une ou plusieurs fois suivant la direction circonférentielle, ou encore il peut être segmenté une ou plusieurs fois suivant chacune des deux directions axiale et circonférentielle. En outre, de manière cumulée avec tous les cas qui précèdent, le moyen amortisseur peut être disposé uniquement sur la face interne de la virole, ou bien il peut être un moyen en trois parties ayant une partie latérale disposée sur une face radiale du disque ou sur une face radiale d'une bride d'extrémité.

L'invention n'est pas limitée à une roue mobile de type disque aubagé monobloc. Elle s'applique également à une roue mobile du type ayant des aubes rapportées sur un disque séparé.

## Revendications

1. Roue mobile (8) de turbomachine comportant une pluralité d'aubes (12), un support (22) axisymétrique des aubes qui s'étendent sensiblement radialement, au moins une pièce intermédiaire (26) s'étendant suivant une direction sensiblement axiale depuis le support (22), et au moins un moyen amortisseur (30, 301, 302) disposé sur au moins une face (262, 264) de la pièce intermédiaire (26), ledit moyen amortisseur (30) comportant au moins une couche (32) de matériau viscoélastique et au moins une contre-couche (34) de matériau rigide, roue **caractérisée par le fait que** le moyen amortisseur (30) est segmenté suivant une direction axiale en au moins deux moyens amortisseurs élémentaires (36) et/ou est segmenté suivant une direction circonférentielle en au moins deux moyens amortisseurs élémentaires.

2. Roue mobile selon la revendication 1, dont le moyen amortisseur (30) recouvre au moins partiellement ladite face (262, 264) de la pièce intermédiaire (26).

3. Roue mobile selon la revendication 1, dont la couche (32) de matériau viscoélastique et la contre-couche (34) de matériau rigide sont fixées l'une à l'autre, par exemple au moyen d'un adhésif.

4. Roue mobile selon la revendication 1, dont le moyen amortisseur (30) comporte plusieurs couches (32) de matériau viscoélastique et plusieurs contre-couches (34) de matériau rigide qui sont disposées de façon alternée.

5. Roue mobile selon la revendication 4, dont au moins une partie des couches (32) de matériau viscoélastique présente des caractéristiques mécaniques différentes.

6. Roue mobile selon la revendication 4 ou 5, dont au moins une partie des contre-couches (34) de matériau rigide présente des caractéristiques mécaniques différentes.

7. Roue mobile selon l'une quelconque des revendications 1 à 6, dont la pièce intermédiaire (26) comporte une zone d'épaisseur non constante (260) sur laquelle est disposé un moyen amortisseur (30), ladite épaisseur augmente suivant une direction axiale, de son bord le plus proche dudit support (22) vers son bord le plus éloigné dudit support (22), ou bien augmente suivant une direction axiale, de son bord le plus éloigné dudit support (22) vers son bord le plus proche dudit support (22) ou bien augmente suivant une direction axiale, de son centre vers son bord le plus éloigné dudit support (22) et vers son bord le plus éloigné dudit support (22) ou bien augmente suivant une direction axiale et suivant une direction circonférentielle.

8. Roue mobile selon l'une quelconque des revendications 1 à 7, dont la pièce intermédiaire (26) comporte une extrémité reliée audit support (22) et le moyen amortisseur (30) comporte une partie principale (35) qui est disposée sur ladite pièce intermédiaire (26) et une partie latérale (37) qui est disposée sur une face sensiblement radiale dudit support (22).

9. Roue mobile selon l'une quelconque des revendications 1 à 7, dont ladite pièce intermédiaire (26) comporte une extrémité reliée à une bride d'extrémité (28, 128), et en ce que le moyen amortisseur (30) comporte une partie principale (35) qui est disposée sur ladite pièce intermédiaire (26) et une partie latérale (37) qui est disposée sur une face sensiblement radiale de ladite bride d'extrémité (28, 128).

10. Roue mobile selon la revendication 8 ou la revendication 9, dont ladite partie principale (35) et ladite partie latérale (37) sont reliées par une partie de liaison (39) formant potence.

11. Roue mobile selon l'une quelconque des revendications 1 à 7 **caractérisée par le fait que** ladite pièce intermédiaire (26) comporte une extrémité reliée audit support (22) de l'aube (12) et une autre extrémité reliée à une bride d'extrémité (28, 128),
elle comporte un premier moyen amortisseur (301) comportant une première partie principale (351) qui est disposée sur ladite pièce intermédiaire (26) et une première partie latérale (371) qui est disposée sur une face sensiblement radiale dudit support (22), lesdites première partie principale (351) et première partie latérale (371) étant reliées par une première partie de liaison (391) formant potence, elle comporte un deuxième moyen amortisseur (302) comportant une deuxième partie principale (352) qui est disposée sur la première partie principale (352) et une deuxième partie latérale (372) qui est disposée sur une face sensiblement radiale de ladite bride d'extrémité (28, 128), lesdites deuxième partie principale (352) et deuxième partie latérale (372) étant reliées par une deuxième partie de liaison (392) formant potence.

12. Roue mobile selon l'une quelconque des revendications 1 à 7, **caractérisée par le fait que**
a. ladite pièce intermédiaire (26) comporte une extrémité reliée audit support (22) de l'aube (12) et une autre extrémité reliée à une bride d'extrémité (28, 128),
b. elle comporte un premier moyen amortisseur (30) comportant une première partie principale (351) qui est disposée sur ladite pièce intermédiaire (26) et une première partie latérale (371) qui est disposée sur une face sensiblement radiale de ladite bride d'extrémité (28, 128), lesdites première partie principale (351) et première partie latérale (371) étant reliées par une première partie de liaison (391) formant potence, et
c. elle comporte un deuxième moyen amortisseur (30) comportant une deuxième partie principale (352) qui est disposée sur la première partie principale (351) et une deuxième partie latérale (352) qui est disposée sur une face sensiblement radiale dudit support (22), lesdites deuxième partie principale (352) et deuxième partie latérale (372) étant reliées par une deuxième partie de liaison (392) formant potence.

13. Roue mobile selon l'une quelconque des revendications 1 à 12, comportant un moyen amortisseur (30) disposé sur une face interne (264) de ladite pièce intermédiaire (26) ou bien sur une face externe (262) de ladite pièce intermédiaire (26).

14. Roue mobile (8), du type comportant un disque (20) ou un anneau portant des aubes (14), notamment pour un turboréacteur (1), selon l'une quelconque des revendications 1 à 13, dont ladite pièce intermédiaire (26) est une virole du disque (20) ou de l'anneau.

15. Turboréacteur (1), comportant au moins une roue (8) selon l'une quelconque des revendications 1 à 14.

## Claims

1. A movable impeller (8) of a turbomachine comprising a plurality of blades (12), an axisymmetric support (22) of the blades that extend substantially radially, at least one intermediate part (26) extending in a substantially axial direction from the support (22) and at least one damping means (30, 301, 302) placed on at least one face (262, 264) of the intermediate part (26), said damping means (30) comprising at least one layer (32) of viscoelastic material and at least one counterlayer (34) of rigid material, the impeller being **characterized by** the fact that the damping means (30) is segmented in an axial direction into at least two elementary damping means (36) and/or is segmented in a circumferential direction into at least two elementary damping means.

2. The movable impeller as claimed in claim 1, wherein the damping means (30) at least partially covers said face (262, 264) of the intermediate part (26).

3. The movable impeller as claimed in claim 1, wherein the layer (32) of viscoelastic material and the counterlayer (34) of rigid material are attached to one another, for example by means of an adhesive.

4. The movable impeller as claimed in claim 1, wherein the damping means (30) comprises several layers (32) of viscoelastic material and several counterlayers (34) of rigid material that are placed alternately.

5. The movable impeller as claimed in claim 4, wherein at least a portion of the layers (32) of viscoelastic material have different mechanical characteristics.

6. The movable impeller as claimed in claim 4 or 5, wherein at least a portion of the counterlayers (34) of rigid material has different mechanical characteristics.

7. The movable impeller as claimed in any one of claims 1 to 6, wherein the intermediate part (26) comprises a zone (260) of nonconstant thickness on which is placed a damping means (30), said thickness increases in an axial direction, from its edge closest to said support (22) to its edge furthest from said support (22), or else increases in an axial direction, from its edge furthest from said support (22) to its edge closest to said support (22) or else increases in an axial direction, from its center to its edge furthest from said support (22) and to its edge furthest from said support (22) or else increases in an axial direction and in a circumferential direction.

8. The movable impeller as claimed in any one of claims 1 to 7, wherein the intermediate part (26) comprises an end connected to said support (22) and the damping means (30) comprises a main portion (35) that is placed on said intermediate part (26) and a lateral portion (37) that is placed on a substantially radial face of said support (22).

9. The movable impeller as claimed in any one of claims 1 to 7, wherein said intermediate part (26) comprises an end connected to an end flange (28, 128), and wherein the damping means (30) comprises a main portion (35) that is placed on said intermediate part (26) and a lateral portion (37) that is placed on a substantially radial face of said end flange (28, 128).

10. The movable impeller as claimed in claim 8 or claim 9, wherein said main portion (35) and said lateral portion (37) are connected by a connecting portion (39) forming a beam.

11. The movable impeller as claimed in any one of claims 1 to 7, **characterized in that** said intermediate part (26) comprises one end connected to said support (22) of the blade (12) and another end connected to an end flange (28, 128),
it comprises a first damping means (301) comprising a first main portion (351) that is placed on said intermediate part (26) and a first lateral portion (371) that is placed on a substantially radial face of said support (22), said first main portion (351) and first lateral portion (371) being connected by a first connecting portion (391) forming a beam, it comprises a second damping means (302) comprising a second main portion (352) that is placed on the first main portion (352) and a second lateral portion (372) that is placed on a substantially radial face of said end flange (28, 128), said second main portion (352) and second lateral portion (372) being connected by a second connecting portion (392) forming a beam.

12. The movable impeller as claimed in any one of claims 1 to 7, **characterized in that**
a. said intermediate part (26) comprises one end connected to said support (22) of the blade (12) and another end connected to an end flange (28, 128),
b. it comprises a first damping means (30) comprising a first main portion (351) that is placed on said intermediate part (26) and a first lateral portion (371) that is placed on a substantially radial face of said end flange (28, 128), said first main portion (351) and first lateral portion (371) being connected by a first connecting portion (391) forming a beam, and
c. it comprises a second damping means (30) comprising a second main portion (352) that is placed on the first main portion (351) and a second lateral portion (352) that is placed on a substantially radial face of said support (22), said second main portion (352) and second lateral portion (372) being connected by a second connecting portion (392) forming a beam.

13. The movable impeller as claimed in any one of claims 1 to 12, comprising a damping means (30) placed on an inner face (264) of said intermediate part (26) or else on an outer face (262) of said intermediate part (26).

14. A movable impeller (8), of the type comprising a disk (20) or a ring supporting blades (14), particularly for a turbojet (1), as claimed in any one of claims 1 to 13, wherein said intermediate part (26) is a collar of the disk (20) or of the ring.

15. A turbojet (1) comprising at least one impeller (8) as claimed in any one of claims 1 to 14.

## Patentansprüche

1. Laufrad (8) einer Turbomaschine, das eine Vielzahl von Schaufeln (12), einen axisymmetrischen Träger (22) der Schaufeln, die sich im Wesentlichen in radialer Richtung erstrecken, mindestens ein Zwischenteil (26), das sich von dem Träger (22) aus in einer im Wesentlichen axialen Richtung erstreckt, und mindestens ein Dämpfungsmittel (30, 301, 302), das auf mindestens einer Fläche (262, 264) des Zwischenteils (26) angeordnet ist, aufweist, wobei das Dämpfungsmittel (30) mindestens eine Schicht (32) aus viskoelastischem Material und mindestens eine Gegenschicht (34) aus steifem Material aufweist, wobei das Rad **dadurch gekennzeichnet ist, dass** das Dämpfungsmittel (30) in einer axialen Richtung in mindestens zwei Dämpfungselemente (36) segmentiert ist und/oder in einer Umfangsrichtung in mindestens zwei Dämpfungselemente segmentiert ist.

2. Laufrad nach Anspruch 1, wobei das Dämpfungsmittel (30) mindestens teilweise die Fläche (262, 264) des Zwischenteils (26) überdeckt.

3. Laufrad nach Anspruch 1, wobei die Schicht (32) aus viskoelastischem Material und die Gegenschicht (34) aus steifem Material aneinander befestigt sind, zum Beispiel mit Hilfe eines Klebemittels.

4. Laufrad nach Anspruch 1, wobei das Dämpfungsmittel (30) mehrere Schichten (32) aus viskoelastischem Material und mehrere Gegenschichten (34) aus steifem Material aufweist, die abwechselnd angeordnet sind.

5. Laufrad nach Anspruch 4, wobei mindestens ein Teil der Schichten (32) aus viskoelastischem Material unterschiedliche mechanische Eigenschaften aufweist.

6. Laufrad nach Anspruch 4 oder 5, wobei mindestens ein Teil der Gegenschichten (34) aus steifem Material unterschiedliche mechanische Eigenschaften aufweist.

7. Laufrad nach einem der Ansprüche 1 bis 6, wobei das Zwischenteil (26) eine Zone mit einer nicht konstanten Dicke (260) aufweist, auf der ein Dämpfungsmittel (30) angeordnet ist, wobei die Dicke in einer axialen Richtung, von ihrem dem Träger (22) am nächsten gelegenen Rand bis zu ihrem von dem Träger (22) am weitesten entfernten Rand, zunimmt oder in einer axialen Richtung, von ihrem von dem Träger (22) am weitesten entfernten Rand bis zu ihrem dem Träger (22) am nächsten gelegenen Rand, zunimmt oder in einer axialen Richtung, von ihrer Mitte bis zu ihrem von dem Träger (22) am weitesten entfernten Rand und bis zu ihrem von dem Träger (22) am weitesten entfernten Rand [sic], zunimmt oder in einer axialen Richtung und in einer Umfangsrichtung zunimmt.

8. Laufrad nach einem der Ansprüche 1 bis 7, wobei das Zwischenteil (26) ein Ende aufweist, das mit dem Träger (22) verbunden ist, und das Dämpfungsmittel (30) einen Hauptteil (35), der auf dem Zwischenteil (26) angeordnet ist, und einen seitlichen Teil (37), der auf einer im Wesentlichen radialen Fläche des Trägers (22) angeordnet ist, aufweist.

9. Laufrad nach einem der Ansprüche 1 bis 7, wobei das Zwischenteil (26) ein Ende aufweist, das mit einem Endflansch (28, 128) verbunden ist, und dass das Dämpfungsmittel (30) einen Hauptteil (35), der auf dem Zwischenteil (26) angeordnet ist, und einen seitlichen Teil (37), der auf einer im Wesentlichen radialen Fläche des Endflanschs (28, 128) angeordnet ist, aufweist.

10. Laufrad nach Anspruch 8 oder Anspruch 9, wobei der Hauptteil (35) und der seitliche Teil (37) durch ein Verbindungsteil (39), das ein Haltemittel bildet, miteinander verbunden sind.

11. Laufrad nach einem der Ansprüche 1 bis 7, **dadurch gekennzeichnet, dass** das Zwischenteil (26) ein Ende, das mit dem Träger (22) der Schaufel (12) verbunden ist, und ein anderes Ende, das mit einem Endflansch (28, 128) verbunden ist, aufweist, es ein erstes Dämpfungsmittel (301) aufweist, das einen ersten Hauptteil (351), der auf dem Zwischenteil (26) angeordnet ist, und einen ersten seitlichen Teil (371), der auf einer im Wesentlichen radialen Fläche des Trägers (22) angeordnet ist, aufweist, wobei der erste Hauptteil (351) und der erste seitliche Teil (371) durch ein erstes Verbindungsteil (391), das ein Haltemittel bildet, verbunden sind, es ein zweites Dämpfungsmittel (302) aufweist, das einen zweiten Hauptteil (352), der auf dem ersten Hauptteil (352) angeordnet ist, und einen zweiten seitlichen Teil (372), der auf einer im Wesentlichen radialen Fläche des Endflanschs (28, 128) angeordnet ist, aufweist, wobei der zweite Hauptteil (352) und der zweite seitliche Teil (372) durch ein zweites Verbindungsteil (392), das ein Haltemittel bildet, verbunden sind.

12. Laufrad nach einem der Ansprüche 1 bis 7, **dadurch gekennzeichnet, dass**
a. das Zwischenteil (26) ein Ende, das mit dem Träger (22) der Schaufel (12) verbunden ist, und ein anderes Ende, das mit einem Endflansch (28, 128) verbunden ist, aufweist,
b. es ein erstes Dämpfungsmittel (30) aufweist, das einen ersten Hauptteil (351), der auf dem Zwischenteil (26) angeordnet ist, und einen ersten seitlichen Teil (371), der auf einer im Wesentlichen radialen Fläche des Endflansches (28, 128) angeordnet ist, aufweist, wobei der erste Hauptteil (351) und der erste seitliche Teil (371) durch ein erstes Verbindungsteil (391), das ein Haltemittel bildet, verbunden sind, und
c. es ein zweites Dämpfungsmittel (30) aufweist, das einen zweiten Hauptteil (352), der auf dem ersten Hauptteil (351) angeordnet ist, und einen zweiten seitlichen Teil (352), der auf einer im Wesentlichen radialen Fläche des Trägers (22) angeordnet ist, aufweist, wobei der zweite Hauptteil (352) und der zweite seitliche Teil (372) durch ein zweites Verbindungsteil (392), das ein Haltemittel bildet, verbunden sind.

13. Laufrad nach einem der Ansprüche 1 bis 12, das ein erstes Dämpfungsmittel (30) aufweist, das auf einer Innenfläche (264) des Zwischenteils (26) oder auf einer Außenfläche (262) des Zwischenteils (26) angeordnet ist.

14. Laufrad (8), vom Typ aufweisend eine Scheibe (20) oder einen Ring, die bzw. der die Schaufeln (14) trägt, insbesondere für ein Turbinentriebwerk (1), nach einem der Ansprüche 1 bis 13, wobei das Zwischenteil (26) ein Mantelring der Scheibe (20) oder des Rings ist.

15. Turbinentriebwerk (1), der mindestens ein Rad (8) nach einem der Ansprüche 1 bis 14 aufweist.
